Europäisches Patentamt

European Patent Office

Office européen des brevets

(11) Veröffentlichungsnummer: **0 423 556 A1**

(12) **EUROPÄISCHE PATENTANMELDUNG**

(21) Anmeldenummer: 90119118.9

(51) Int. Cl.5: **B25J 15/02**

(22) Anmeldetag: 05.10.90

(30) Priorität: 20.10.89 DE 3934972

(43) Veröffentlichungstag der Anmeldung:
**24.04.91 Patentblatt 91/17**

(84) Benannte Vertragsstaaten:
**DE ES FR GB IT**

(71) Anmelder: ManuMatik Produktionssysteme
GmbH
Schlosserstrasse 15
W-7440 Nürtingen(DE)

(72) Erfinder: Henzler, Adolf
Talstrasse 51
W-7440 Nürtingen-Raidwangen(DE)
Erfinder: Henschel, Karl-Heinz
Tiefenbachstrasse 19
W-7440 Nürtingen(DE)

(74) Vertreter: Herrmann, Günther et al
c/o Körber AG Patentabteilung
Kampchaussee 8-32
W-2050 Hamburg 80(DE)

(54) Parallelgreiferantrieb für Handhabungsgeräte.

(57) Die Greiferbacken (1 , 2) eines Parallelgreifersystems werden über drehbar gelagerte Winkelhebel (8) durch einen Linearantrieb (7) betätigt. Die Verbindungen zwischen dem Winkelhebel (8) und dem Greiferbacken einerseits und einer Schubstange (11) des Linearantriebs andererseits werden durch Koppelglieder (19 bzw. 21) hergestellt, die jeweils durch Drehgelenke (14, 16 bzw. 17, 18) mit den genannten Elementen verbunden sind.

Fig. 1

EP 0 423 556 A1

## PARALLELGREIFERANTRIEB FÜR HANDHABUNGSGERÄTE

Die Erfindung betrifft einen Parallelgreiferantrieb für Handhabungsgeräte, mit wenigstens zwei mittels eines Linearantriebes aufeinanderzu bzw. voneinanderweg bewegbaren Greiferbacken.

In der Montagetechnik werden bei fortschreitender Automatisierung in zunehmendem Maße Greifer eingesetzt, um Werkstücke zu greifen, zu transportieren und positionsgenau abzusetzen. Dabei haben Parallelgreifer gegenüber anderen Drei fern den großen Vorteil, daß sich das Greifzentrum auch bei unterschiedlichen Werkstücken immer an ein und derselben Stelle befindet und sich auch beim Öffnen und Schließen des Greifers nicht verlagert.

Der Erfindung liegt die Aufgabe zugrunde, eine Greifvorrichtung der eingangs beschriebenen Art weiter zu verbessern und dazu eine Greifvorrichtung anzugeben, deren einwandfreie Arbeitsweise auch auf Dauer gewährleistet ist.

Diese Aufgabe wird erfindungsgemäß gelöst durch ein die translatorische Bewegung des Linearantriebes in eine im wesentlichen quer dazu gerichtete translatorische Greiferbewegung umsetzendes Übertragungsgestänge. Eine insbesondere auf eine gedrängte Bauweise ausgerichtete Ausgestaltung besteht darin, daß das Übertragungsgestänge schwenkbar gelagerte Winkelhebel aufweist, deren eines Hebelende mit dem Linearantrieb und deren anderes Hebelende mit den Greiferbacken in Wirkverbindung steht. Eine besonders auf Dauerhaltbarkeit und Funktionssicherheit ausgelegte Weiterbildung besteht darin, daß die Wirkverbindungen aus Kopelgliedern bestehen, deren Koppelenden jeweils einerseits mit den Hebelenden eines Winkelhebels und andererseits mit dem Linearantrieb bzw. einem Greiferbacken gelenkig verbunden sind. Zweckmäßigerweise sind die Koppelglieder als

Verbindungslaschen ausgebildet, wobei die Verbindungsstellen der Koppelglieder Drehgelenke aufweisen. Nach einem weiteren Vorschlag sind die Koppelglieder an einer Schubstange des Linearantriebes angelenkt, wobei gemäß einer weiteren Ausgestaltung der Linearantrieb als druckmittelbetätigte Kolben-Zylinder-Einheit ausgebildet ist, deren Kolben die Schubstange antreibt.

Eine zusätzlich das Verschleißverhalten des Greiferantriebes verbessernde Weiterbildung besteht darin, daß die Führungen der Greiferbacken als Wälzlagerflachführungen ausgebildet sind, welche mit Vorspannung montierbar sind, damit spielfrei betrieben werden können und somit die Lebensdauer erhöhen.

Der mit der Erfindung erzielte Vorteil liegt in den durch die Drehgelenke erzeugten reinen Dreh bewegungen, welche eine spiel- und verschleißfreie Arbeitsweise des Greiferantriebes gewährleisten, wodurch sich dessen Standzeit bei gleichbleibender Funktionssicherheit und Funktionsgenauigkeit beträchtlich erhöht.

Die Erfindung wird nachstehend anhand des in den beigefügten Abbildungen dargestellten Ausführungsbeispiels näher erläutert.

Hierbei zeigen:

Figur 1 einen längsgeschnittenen Greiferkopf in unterschiedlichen Arbeitsstellungen,

Figur 2 einen Teilausschnitt des Greiferkopfes in einer weiteren Arbeitsstellung und

Figur 3 einen Querschnitt durch den Greiferkopf nach der Linie III-III gemäß Figur 2.

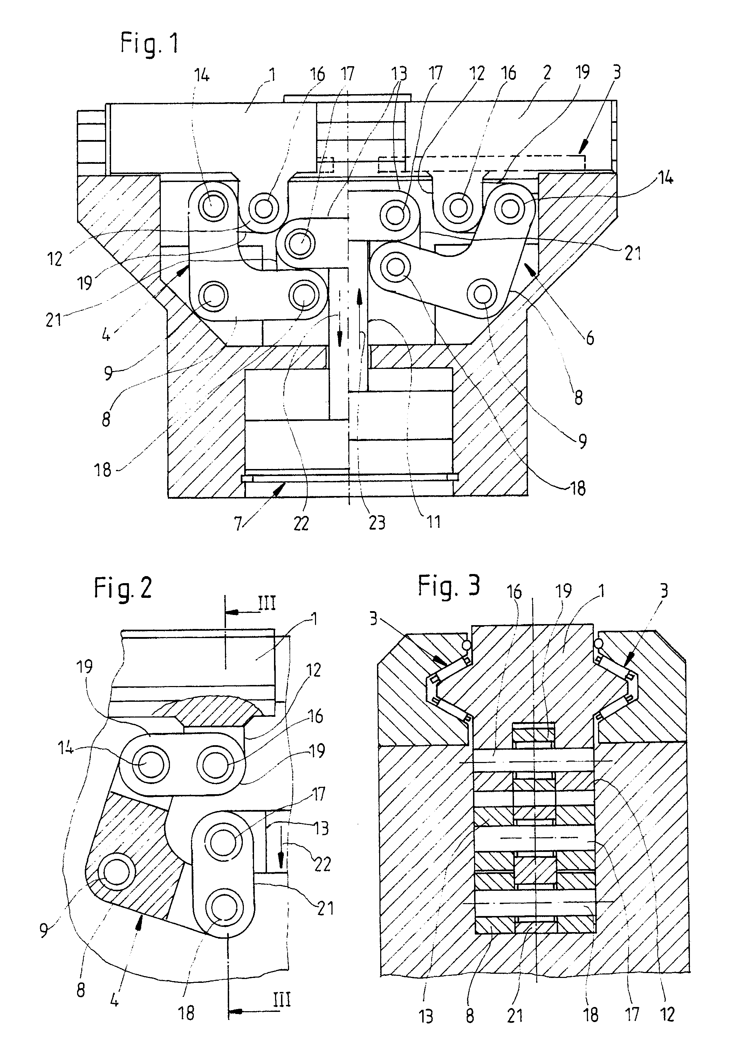

Der in den Figuren 1 bis 3 dargestellte Greiferkopf weist zwei Greiferbacken 1 und 2 auf, die mittels als Nadel lager ausgebildete Wälzlagerflachführungen 3 geführt sind. die Greiferbacken 1 und 2 können oberseitig nicht dargestellte Zentrieroder Spannstifte tragen, mit denen die zu transportierenden Werkstücke innen- oder außenseitig erfaßt werden.

Zum Antrieb bzw. zur Parallelverschiebung der Greiferbacken 1 und 2 ist ein Übertragungsgestänge 4 bzw. 6 vorgesehen, welches die translatorische Bewegung eines als druckmittelbetätigte Kolben-Zylinder-Einheit 7 ausgebildeten Linearantriebes in die quer dazu gerichtete translatorische Greiferbewegung der Greiferbacken 1 und 2 umsetzt. Hierzu weist jedes Übertragungsgestänge 4 bzw. 6 einen gabelförmigen Winkelhebel 8 auf, der mittels eines Nadellagers 9 im Greiferkopf verschwenkbar ist. Die Greiferbacken 1 und 2 sowie eine Schubstange 11 des Linearantriebes 7 sind jeweils mit einer Verbindungsgabel 12 bzw. 13 versehen, die wiederum jeweils über zwei Drehgelenke 14, 16 bzw. 17, 18 durch als Verbindungslaschen ausgebildete Koppelglieder 19 bzw. 21 mit den freien Hebelenden der Winkelhebel 8 verbunden sind. Auf diese Weise werden durch Verschiebung der Schubstange 11 des Linearantriebes 7 in Richtung des Pfeils 22 die Greiferbacken 1 und 2 nach innen und durch Stellen der Schubstange 11 in Richtung des Pfeils 23 die Dreiferbacken praktisch spielfrei nach außen bewegt. In Figur 2 ist noch einmal die extreme Innenstellung des Greiferbackens 1 bei der entsprechenden Schwenkstellung des Übertragungsgestänges 4 dargestellt.

## Ansprüche

1. Parallelgreiferantrieb für Handhabungsgeräte, mit wenigstens zwei mittels eines Linearantriebes aufeinanderzu bzw. voneinanderweg bewegbaren Greiferbacken, gekennzeichnet durch ein die translatorische Bewegung des Linearantriebes (7) in eine im wesentlichen quer dazu gerichtete translatorische Greiferbewegung umsetzendes Übertragungsgestänge (4, 6).

2. Parallelgreiferantrieb nach Anspruch 1, dadurch gekennzeichnet, daß das Übertragungsgestänge (4, 6) schwenkbar gelagerte Winkelhebel (8) aufweist, deren eines Hebelende mit dem Linearantrieb (7) und deren anderes Hebelende mit den Greiferbakken (1, 2) in Wirkverbindung steht.

3. Parallelgreiferantrieb nach Anspruch 1 oder 2, dadurch gekennzeichnet, daß die Wirkverbindungen aus Koppelgliedern (19; 21) bestehen, deren Koppelenden jeweils einerseits mit den Hebelenden eines Winkelhebels (8) und andererseits mit dem Linearantrieb (7) bzw. einem Greiferbacken (1; 2) gelenkig verbunden sind.

4. Parallelgreiferantrieb nach einem der Ansprüche 1 bis 3, dadurch gekennzeichnet, daß die Koppelglieder als Verbindungslaschen (19, 21) ausgebildet sind.

5. Parallelgreiferantrieb nach einem der Ansprüche 1 bis 4, dadurch gekennzeichnet, daß die Verbindungsstellen der Koppelglieder (19, 21) Drehgelenke (14, 16; 17, 18) aufweisen.

6. Parallelgreiferantrieb nach einem der Ansprüche 1 bis 5, dadurch gekennzeichnet, daß die Koppelglieder (21) an einer Schubstange (11) des Linearantriebes (7) angelenkt sind.

7. Parallelgreiferantrieb nach einem der Ansprüche 1 bis 6, dadurch gekennzeichnet, daß der Linearantrieb als druckmittelbetätigte Kolben-Zylinder-Einheit (7) ausgebildet ist, deren Kolben die Schubstange (11) antreibt.

8. Parallelgreiferantrieb nach einem der Ansprüche 1 bis 7, dadurch gekennzeichnet, daß die Führungen der Greiferbacken (1, 2) als Wälzlagerflachführungen (3) ausgebildet sind.

Fig. 1

Fig. 2

Fig. 3

## Europäisches Patentamt

# EUROPÄISCHER RECHERCHENBERICHT

Nummer der Anmeldung

**EP 90 11 9118**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | DE-A-3 524 578 (BOSCH) <br> * Ansprüche 1-4 * <br> — — — | 1,2,7,3-6, 8 | B 25 J 15/02 |
| X,A | DE-A-3 325 921 (PFAFF INDUSTRIEMASCHINEN) <br> * Seite 5, Zeilen 1 - 33 * <br> — — — | 1,4-7,3 | |
| X | US-A-3 051 327 (GOODELL) <br> * Spalte 6, Zeile 56 - Spalte 7, Zeile 6; Figur 17 * <br> — — — | 1,4,5 | |
| Y | US-A-3 620 095 (DANE) <br> * Spalte 3, Zeile 46 - Spalte 4, Zeile 19 * <br> — — — | 3 | |
| Y | FR-A-1 446 414 (LA CALHENE) <br> * Seite 1, Spalte 2, Zeile 31 - Seite 2, Spalte 2, Zeile 4 * <br> — — — | 4-6 | |
| Y | ZWF ZEITSCHRIFT FUR WIRTSCHAFTLICHE FERTI-GUNG. vol. 84, no. 4, April 1989, MUNCHEN DE Seite ZM76 "LINEAR ANTRIEBSEINHEITEN" <br> * Seite ZM76, Spalte 2, Absatz 2 * <br> — — — | 8 | |
| A | US-A-3 759 563 (KITAMURA) <br> * Spalte 2, Zeilen 24 - 52 * <br> — — — | 1,3-7 | |
| A | DE-B-2 937 061 (PFAFF INDUSTRIEMASCHINEN) <br> — — — — — | | |

### RECHERCHIERTE SACHGEBIETE (Int. Cl.5)

B 25 J

Der vorliegende Recherchenbericht wurde für alle Patentansprüche erstellt

| Recherchenort | Abschlußdatum der Recherche | Prüfer |
|---|---|---|
| Den Haag | 15 Januar 91 | LAMMINEUR P.C.G. |